# FASCICULE DE BREVET EUROPEEN

(11) **EP 0 855 206 B1**
(45) Date de publication et mention de la délivrance du brevet: **17.03.2004**
(21) Numéro de dépôt: 97810032.9
(22) Date de dépôt: 22.01.1997
(51) Int. Cl.: B01D 19/00

(54) **Dispositif et procédé de dégazage pour substances visqueuses ou pâteuses**
Entlüftungsvorrichtung und -verfahren für visköse oder dickflüssige Substanzen
Deaeration apparatus and process for viscous or pasty substances

(43) Date de publication de la demande: 29.07.1998
(73) Titulaire: HORMEC TECHNIC SA, 2560 Nidau (CH)
(72) Inventeur: Reich, Léon, 2560 Nidau (CH)
(74) Mandataire: BOVARD AG - Patentanwälte

(56) Documents cités:
- CH-A- 252 746
- DE-A- 3 921 482

## Description

La présente invention concerne un dispositif de dégazage selon le préambule de la revendication 1 et un procédé de dégazage selon le préambule de la revendication 20. En particulier, l'invention concerne un dispositif de dégazage pour dégazer la graisse, les lubrifiants ou toute autre substance visqueuse ou pâteuse.

Dans le domaine de l'électronique ou de la microtechnique notamment, on a souvent besoin d'appliquer des portions de lubrifiant parfois très faibles mais parfaitement dosées. Un lubrifiant, en particulier la graisse, contenant des bulles ou des poches d'air ou de gaz est difficile à doser et à distribuer et doit donc être dégazé. On connaît dans l'art antérieur différentes techniques de dégazage de lubrifiants. Selon une première technique, le dégazage est effectué en système fermé, c'est-à-dire pot par pot. Les pots de graisse successifs sont dégazés les uns après les autres par exemple au moyen d'un brasseur particulier agitant la graisse de manière à en extraire les bulles. Cette technique est lente et peu efficace à mettre en oeuvre dans des chaînes de fabrication, car elle nécessite l'intervention répétée d'un opérateur pour remplacer les pots de graisse.

On connaît également des techniques de dégazage de lubrifiants en continu. Le document de brevet DE3921482 décrit par exemple un dispositif dans lequel la substance à dégazer pénètre dans une chambre de dégazage par une pluralité d'orifices d'introduction circulaires répartis dans les parois latérales de la chambre. Un dispositif permet d'effectuer le vide d'air dans la chambre de dégazage. Les orifices d'introduction permettent de laminer la substance à dégazer et donc d'augmenter considérablement sa surface effective. Les bulles d'air prisonnières dans la substance quittent alors la substance pour occuper le vide dans la chambre de dégazage. Un piston permet de comprimer et d'évacuer périodiquement la substance dégazée hors de la chambre de dégazage.

La substance à dégazer à pression atmosphérique pénètre la chambre de dégazage. La différence de pression Δp entre la substance et l'intérieur de la chambre de dégazage n'est donc que d'une atmosphère environ. Lorsque le lubrifiant à dégazer est très visqueux, la tension superficielle à l'interface lubrifiant-vide est importante et les bulles d'air dans le lubrifiant n'arrivent pas à s'échapper. Le dégazage n'est donc que partiel, et le débit de lubrifiant dégazé est limité en raison de cette faible différence de pression.

La demande de brevet EP93810657.2 au nom de la demanderesse décrit un autre dispositif de dégazage similaire. Ce dispositif fonctionne en deux temps distincts. Dans un premier temps, la substance à dégazer pénètre dans une chambre de dégazage par une pluralité d'orifices d'introduction de faible ouverture, le vide étant effectué dans cette chambre. Dans un deuxième temps, la pression est restituée dans la chambre de dégazage et la matière dégazée est expulsée par un piston. L'expulsion se fait donc à pression atmosphérique, et des bulles d'air risquent de se reformer dans la matière dégazée. En outre la différence de pression entre la matière introduite et l'intérieur de la chambre de dégazage est insuffisante pour assurer un dégazage rapide et efficace.

Le brevet BE657805 décrit un dispositif de dégazage en continu adapté en particulier pour dégazer l'essence dans les stations services. L'essence doit traverser un treillis à mailles fines. Ce dispositif ne convient pas au dégazage de substances visqueuses ou de lubrifiants inaptes à traverser le treillis.

Le brevet CH 2525746 est relatif à un dispositif de dégazage qui comprend :
- une chambre de dégazage munie d'au moins un orifice d'introduction de la substance à dégazer et d'au moins un orifice d'évacuation de la substance dégazée,
- des moyens de compression permettant de comprimer la substance à dégazer avant l'introduction dans la chambre de dégazage,
- un dispositif pour effectuer le vide d'air dans la chambre de dégazage,
- des moyens d'expulsion de la substance dégazée hors de la chambre de dégazage par au moins un des orifices d'évacuation, lesdits moyens d'expulsion,
   . permettant d'expulser la substance dégazée en maintenant le vide à l'intérieur de la chambre de dégazage,
   . comprenant au moins un cylindre et au moins un piston à l'intérieur de la chambre de dégazage, le ou les orifices d'évacuation étant disposés au fond du ou des cylindres, la substance à dégazer parvenant dans les cylindres lorsque le piston correspondant est relevé et étant évacuée hors des cylindres et de la chambre de dégazage par le ou les orifices d'évacuation correspondant lorsque le piston correspondant est abaissé.

Dans ce dispositif, le moyen d'expulsion est placé au centre et à la partie inférieure d'une cuve dont la partie supérieure constitue la chambre de dégazage.

Le liquide est introduit dans la chambre de dégazage et, au cours de son dégazage, chute dans la cuve, autour du moyen d'expulsion, dans lequel il s'écoule finalement en y pénétrant par une ouverture latérale.

Avec ce dispositif, dans lequel le liquide dégazé s'écoule indirectement dans le moyen d'expulsion, il n'est pas possible d'envisager, dans des conditions industriellement acceptables, le dégazage d'une substance pâteuse ou dont l'écoulement est extrêmement lent, voire impossible.

Un but de la présente invention est donc de proposer un dispositif et un procédé de dégazage améliorés, en particulier un dispositif et un procédé qui ne présentent pas les inconvénients mentionnés.

Selon l'invention, ce but est atteint grâce à un dispositif de dégazage comportant les éléments de la partie caractérisante de la revendication 1 et par un procédé de dégazage comportant les éléments de la partie caractérisante de la revendication 20. Des caractéristiques préférentielles sont en outre mentionnées dans les revendications dépendantes.

L'invention sera mieux comprise à l'aide de la description donnée à titre d'exemple et illustrée par les figures qui montrent:
La figure 1 une vue en coupe du dispositif de dégazage selon une première variante de l'invention.
La figure 2A une vue en perspective d'une première variante d'orifice d'introduction de substance à dégazer dans la chambre de dégazage.
Les figures 2B à 2E quatre variantes supplémentaires de l'orifice d'introduction de substance à dégazer dans la chambre de dégazage.
La figure 3 une vue en coupe du dispositif de dégazage selon une deuxième variante de l'invention.
La figure 4 un détail vu de dessous des aiguilles d'introduction de substance à dégazer et d'une plaque perforée dans le dispositif de la figure 3.
La figure 5 une vue en coupe du dispositif de dégazage selon une troisième variante de l'invention.

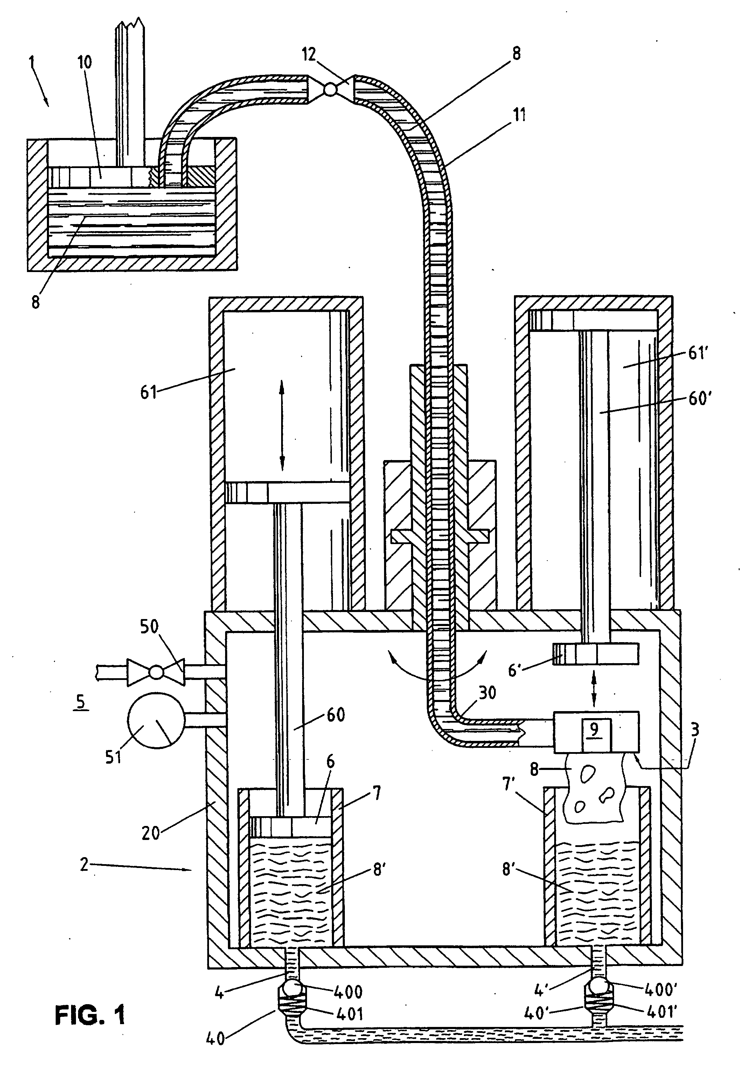

Le dispositif de dégazage selon la variante de l'invention illustrée sur la figure 1 comprend principalement une chambre de dégazage 2. Des moyens 5, symbolisés ici par une vanne 50 et par un manomètre 51, permettent d'effectuer un vide poussé à l'intérieur de la chambre de dégazage 2. Les moyens 5 peuvent être constitués par une pompe à vide conventionnelle ou par un dispositif de Venturi permettant d'obtenir un vide plus poussé, au prix toutefois d'une consommation importante d'air comprimé. Les parois 20 de la chambre de dégazage sont de préférence réalisées en acier ou en aluminium avec une épaisseur suffisante pour résister à la dépression importante à l'intérieur de la chambre. La paroi frontale de la chambre de dégazage peut être transparente afin de surveiller le déroulement du procédé à l'intérieur de la chambre, et peut être ouverte pour le nettoyage ou le remplacement de pièces à l'intérieur. Des joints appropriés sont prévus pour éviter les infiltrations d'air par la paroi frontale.

La substance à dégazer 8, par exemple un lubrifiant, est stockée dans un fût ou un récipient 1. Dans l'exemple illustré, la substance à dégazer 8 est stockée dans un fût 1 équipé d'une pompe à fût 10. Une canalisation 11 permet d'amener la substance à dégazer comprimé dans la chambre de dégazage. La pression de la substance à dégazer 8 à la sortie de la pompe à fût 10 est très élevée, de préférence de l'ordre de 50 à 60 bars. Le tube 11 est de préférence muni d'une vanne 12 permettant de stopper l'introduction de substance à dégazer. D'autres types de pompe ou de moyens de compression, par exemple des pompes à vis ou des pompes à engrenage, peuvent naturellement être utilisés pour comprimer la substance à dégazer 8.

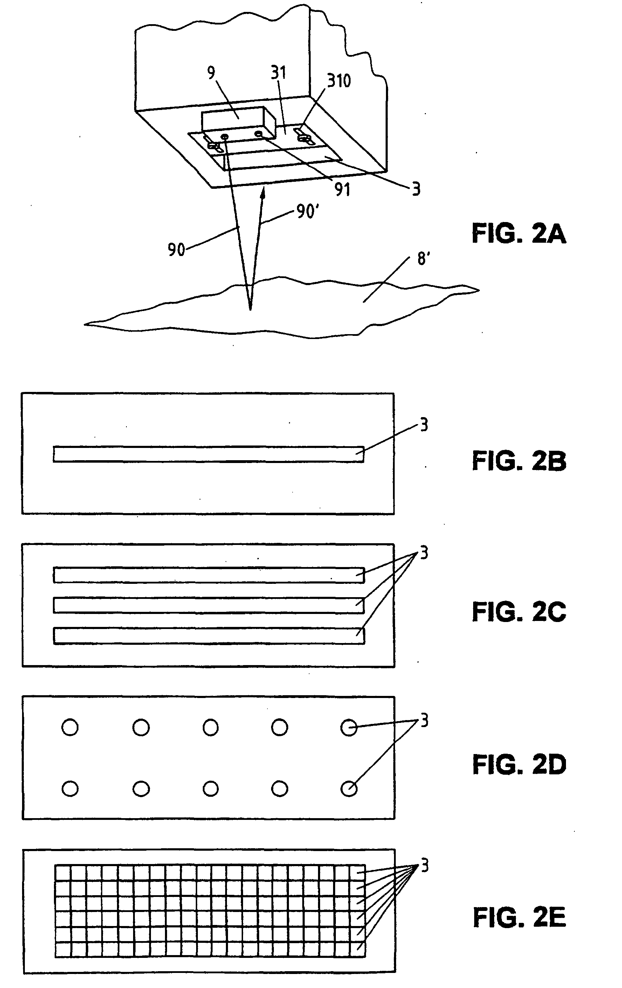

La canalisation 11 traverse une des parois 20 de la chambre de dégazage 2, des joints appropriés étant prévus à cet endroit pour éviter les infiltrations d'air. La substance à dégazer 8 sous pression pénètre ainsi dans la chambre de dégazage 2 par la canalisation 11 munie d'un coude 30. L'extrémité de cette canalisation est munie d'au moins un orifice 3, par exemple d'une rainure permettant de laminer la substance à dégazer et donc d'augmenter considérablement sa surface effective. Nous discuterons plus loin en relation avec les figures 2A à 2E diverses variantes de formes que peut adopter l'orifice 3.

La substance à dégazer sous pression 8 pénètre donc dans la chambre de dégazage 2 sous la forme d'un mince film ou d'une pluie fine sortant de l'orifice 3 et tombe par gravité dans le cylindre 7' placé au-dessous de la position actuelle de l'orifice 3. En raison de la pression très importante de la substance comprimée 8, qui est encore augmentée par la dimension réduite de l'orifice 3, les bulles ou poches de gaz enfermées dans la substance à dégazer 8 sont libérées en explosant pratiquement dans le vide. La substance 8' emmagasinée au fond du cylindre 7' est ainsi dégazée de manière très efficace.

Un détecteur optique 9 de hauteur de substance à dégazer monté à proximité de l'orifice 3 surveille en permanence la hauteur atteinte par la substance dégazée à l'intérieur du cylindre 7'. Le détecteur optique 9 peut par exemple émettre un faisceau lumineux 90 dirigé obliquement vers la surface réfléchissante de la substance à dégazer 8. Dès que la graisse 8' a atteint une hauteur prédéterminée dans le cylindre, le rayon lumineux 90' (voir figure 2A) réfléchi par la surface de la substance dégazée 8' atteint une cellule de détection lumineuse 91 intégrée dans le détecteur 9. D'autres types de capteurs ou de détecteurs peuvent être prévus pour surveiller la hauteur et/ou le volume atteint par la substance 8' dans le cylindre 7', par exemple des détecteurs électriques, résistifs, à contact ou des systèmes de pesée. En outre, ces moyens peuvent être disposés ailleurs, par exemple sur les flancs ou le rebord de chaque cylindre 7, 7'.

Pendant que le cylindre 7' se remplit peu à peu, la substance dégazée contenue dans l'autre cylindre 7 est évacuée au moyen d'un piston 6 actionné par des moyens électriques ou pneumatiques 61 et expulsant la substance 8 par l'orifice d'évacuation 4. L'orifice d'évacuation 4 est relié par exemple à une machine de graissage ou à un dispositif de remplissage de récipients avec la substance dégazée. Une diode fluidique 4, respectivement 4', comprenant dans cet exemple un ressort 401, respectivement 401' et une bille 400, respectivement 400', empêche la substance expulsée d'un des cylindres 7, respectivement 7', de remonter par l'autre cylindre.

Lorsque le détecteur 9 a détecté un remplissage complet du cylindre en cours de remplissage 7', des moyens de commande non représentés commandent tout d'abord l'interruption momentanée de l'arrivée de substance à dégazer 8, par exemple en agissant sur la vanne 12. Un délai est alors nécessaire pour que la substance à dégazer 8 résiduelle dans la canalisation 11 sorte par l'orifice d'introduction 3, et pour que le film de substance à dégazer encore suspendu près de l'orifice 3 tombe dans le cylindre 7'. Des moyens optionnels peuvent être prévus pour racler et nettoyer à ce moment l'orifice 3. Le piston 6 actionné par les moyens 61 est ensuite relevé au-dessus du cylindre 7, puis le bras coudé 30 de la canalisation 11 est mis en rotation par des moyens non représentés, par exemple par un moteur électrique ou un actuateur pneumatique, jusqu'à ce que l'orifice d'introduction 3 se trouve au-dessus de l'autre cylindre 7. La vanne 12 est alors ouverte à nouveau, en sorte que rapidement la substance à dégazer 8 parvient à nouveau jusqu'à l'orifice 3 et tombe dans le cylindre 7. Pendant ce temps, le piston 6' au-dessus du cylindre 7' est abaissé par des moyens électriques ou pneumatiques 61', de manière à évacuer la substance dégazée 8' dans le récipient 7'. Le cycle de remplissage - vidage en alternance des deux cylindres se poursuit de cette manière aussi longtemps que nécessaire. De cette manière, l'évacuation de substance dégazée par les orifices d'évacuation 4, 4' n'est pas interrompu en sorte que la substance dégazée 8' s'écoule en continu hors du dispositif de dégazage, sans qu'un réservoir de stockage intermédiaire en aval du dispositif soit obligatoirement nécessaire.

Les figures 2A à 2E illustrent à titre d'exemple différentes variantes possibles de l'orifice d'introduction 3. Sur la figure 2A, l'orifice est constitué par une simple rainure dont la largeur peut être ajustée en déplaçant une plaque 31 fixée par exemple au moyen de vis 310. La largeur de la rainure 3 sera réglée en fonction de la substance à dégazer de manière à garantir à la fois un débit régulier et suffisant, sans former d'accumulations à la sortie, et une section horizontale du film de substance 8 produit suffisamment fine pour empêcher l'emprisonnement de bulles de gaz au milieu d'une masse importante de graisse.

Les figures 2B à 2E illustrent d'autres variantes d'orifice d'introduction 3. Ces variantes correspondent par exemple à un jeu de plaques amovibles pouvant être vissées ou fixées au choix à l'extrémité de la canalisation 11 afin d'adapter le dispositif de dégazage à différents types de graisse ou à différents débits ou qualité de dégazage requis. Sur la figure 2B, la plaque est munie d'une simple ouverture 3 longitudinale de largeur déterminée. Le dispositif de dégazage pourra par exemple être commercialisé avec un ensemble de plaques munis de rainures de largeur variée, correspondant à divers types de substance donnés, ou avec une seule plaque réglable comme illustrée sur la figure 2A. Sur la figure 2C, la plaque comporte une pluralité d'orifices 3 en forme de rainures longitudinales parallèles. Pour une largeur des rainures données, cette plaque permet un débit de substance 8 supérieure à la plaque de la figure 2B; toutefois, il est important de veiller à ce que les films de substance sortant de rainures voisines ne se collent pas et ne forment pas ainsi des accumulations de graisse mal dégazée qui pourraient tomber en bloc dans un des deux cylindres 7, 7'. Sur la figure 2D, la plaque est munie d'une pluralité d'orifices circulaires 3 de diamètre déterminé en fonction de la substance à dégazer. Dans ce cas, la substance 8 pénètre dans la chambre de dégazage 1 sous la forme d'une pluie de filaments. Enfin, dans la figure 2E, la substance est laminée par un treillis. D'autres formes, dispositions et dimensions des orifices ou filières 3 peuvent bien entendu être imaginées en fonction des caractéristiques particulières d'une substance à dégazer.

Cette variante de l'invention a été décrite ici dans le cas particulier d'une exécution avec deux cylindres et deux pistons. Un nombre de cylindres et de pistons quelconque, supérieur ou égal à 1, peut être prévu. Dans ce cas, selon les débits de remplissage et d'évacuation maximaux déterminés par la substance à dégazer 8, un ou plusieurs cylindres pourront être remplis et/ou vidés simultanément. En outre, dans l'exemple illustré, un piston 6, respectivement 6', est prévu au-dessus de chaque cylindre 7, respectivement 7'. A chaque instant pourtant, un des deux pistons est relevé et reste inactif. Dans une variante non illustrée de l'invention, le dispositif comporte moins de pistons 6 que de cylindres 7, par exemple un piston pour deux cylindres. A la fin d'un cycle de remplissage-vidage, les cylindres sont alors déplacés de manière à échanger leur position sous le piston de vidage et sous l'orifice d'introduction 3. Cette variante permet en outre d'économiser le dispositif permettant de pivoter le bras 30. Le dispositif pourrait aussi comporter n cylindres montés sur un tambour rotatif et un seul piston au-dessus d'une des positions des cylindres. A chaque instant, n-1 cylindres sont alors remplis par n-1 orifices d'introduction 3, tandis que le dernier cylindre est vidé par l'unique piston. Lorsque le dernier cylindre est vidé, le tambour est actionné en rotation et les cylindres sont décalés d'un rang, de manière à ce qu'un autre cylindre soit vidé.

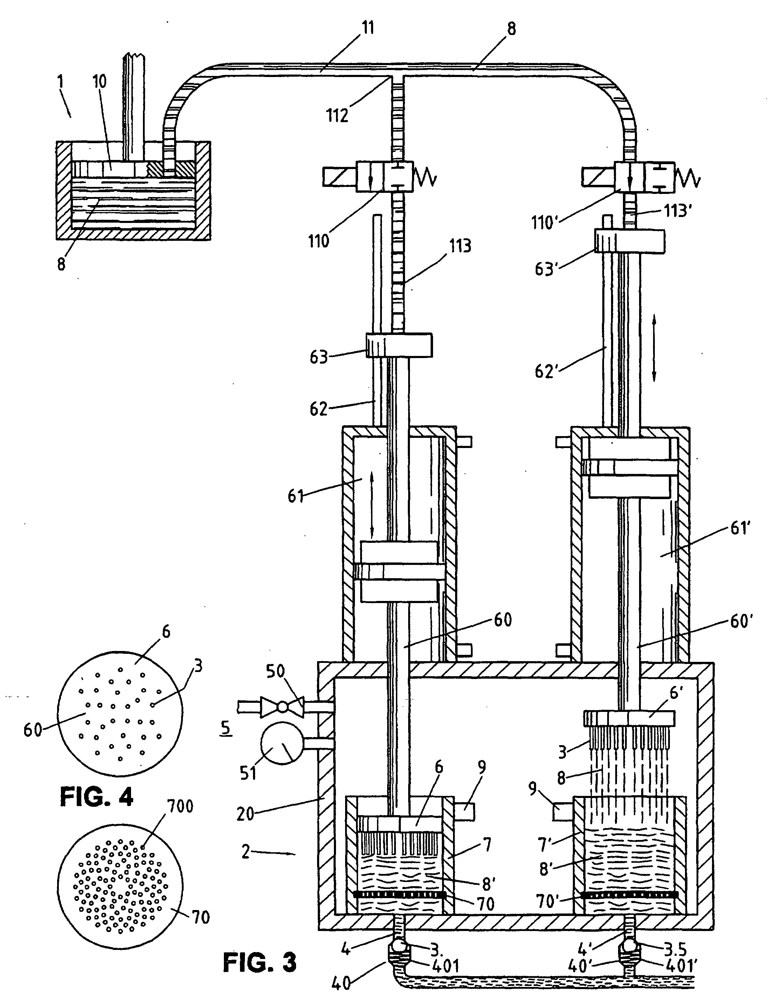

La figure 3 illustre.une vue en coupe d'une deuxième variante de l'invention permettant d'économiser le dispositif de pivotement du bras tout en augmentant le débit maximal possible. Les éléments identiques à ceux de la figure 1 portent la même numérotation et leur description n'est pas reprise ici.

Par opposition à la première variante, la canalisation 11 comprend une enfourchure 112 dont l'entrée est reliée à la pompe à fût 1 tandis que les deux sorties 113, 113' correspondent chacune à un ensemble piston-cylindre 6, 7, respectivement 6', 7'. La substance à dégazer 8 est donc déjà répartie entre l'un ou l'autre cylindre avant d'entrer dans la chambre de dégazage 2. Le contrôle de la répartition entre les deux cylindres se fait au moyen de vannes 110, 110', par exemple des valves pneumatiques ou électromagnétiques, permettant de bloquer ou d'ouvrir individuellement chaque canalisation 113, 113' et donc de contrôler l'alimentation en substance à dégazer 8 de chaque ensemble piston-cylindre.

La substance à dégazer traverse ensuite les tiges 60, 60' des pistons 6, 6' qui dans ce cas sont creuses. Dans l'exemple illustré, les canalisations 113, 113' pénètrent dans l'ouverture à l'extrémité des tiges de piston 60, 60' hors de l'enceinte de dégazage 2. Lors du déplacement des pistons, la profondeur de pénétration des canalisations 113, 113' dans les tiges de piston 60, 60' varie. Des joints peuvent être prévus pour empêcher les fuites de substance 8 à l'interface canalisation-tige. Dans une variante, les canalisations 113, 113' peuvent être réalisées de manière articulée ou en matériau souple. Dans ce cas, les canalisations sont simplement reliées à l'extrémité des tiges de piston creuses et adoptent une courbure variant avec la position des tiges de piston 60, 60'. Des canalisations souples 113 pourraient aussi être reliées à l'ouverture dans les tiges de piston par une ouverture dans une de leur surface latérale, ou être directement reliées à la tête de piston 6, 6'. Ces variantes permettent de réduire le nombre de joints soumis au frottement de pièces mobiles et donc d'améliorer l'étanchéité de la chambre de dégazage 2. Toutefois, il est malcommode de réaliser des canalisations souples qui résistent à des pressions importantes.

L'orifice d'introduction 3 correspondant à chaque ensemble piston-cylindre est constitué par une pluralité d'aiguilles fines et creuses 3 disposées directement sur la tête de piston. La substance à dégazer provenant de la canalisation est répartie au niveau de la tête de piston entre les différentes aiguilles et s'écoule en une pluie fine tombant dans le cylindre 7, 7' correspondant.

Les vannes 110, 110' sont contrôlées par une unité de commande non représentée de manière à interrompre l'admission de substance à dégazer 8 dès que le niveau de substance dégazée 8' mesuré par les détecteurs 9 atteint une certaine valeur dans le cylindre. Le piston correspondant est alors abaissé par les moyens 61, respectivement 61', de manière à expulser la substance dégazée par l'orifice d'évacuation 4, respectivement 4'. Comme les deux ensembles cylindres-pistons possèdent chacun un orifice d'introduction 3 non partagé, les deux ensembles peuvent travailler indépendamment et en parallèle. Les deux cylindres peuvent ainsi être remplis ou même vidés simultanément. Il n'est donc pas nécessaire d'attendre qu'un cylindre soit plein pour commencer le remplissage de l'autre, ce qui permet d'augmenter le débit du dispositif.

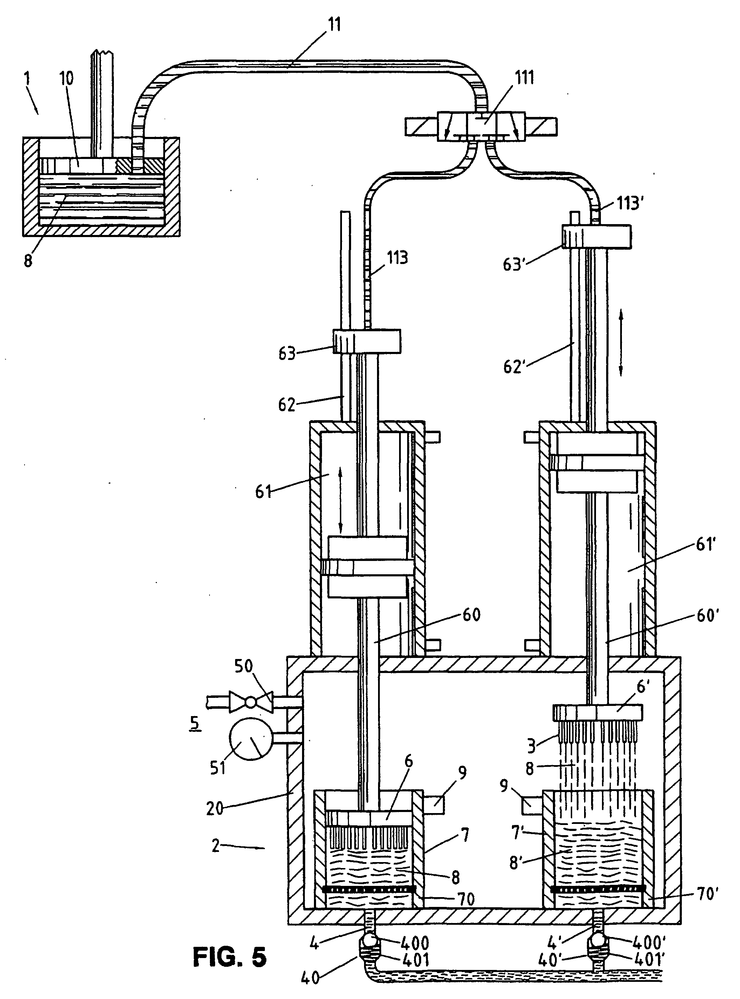

Une plaque perforée 70 au fond du cylindre 7 permet de râcler la surface des aiguilles 3 lorsque le piston 6 remonte après l'expulsion de la substance dégazée 8'. La partie supérieure de la figure 4 illustre la disposition des aiguilles 3 sur la tête de piston 6 tandis que la disposition des perforations 700 à travers la plaque 70 est illustrée sur la partie inférieure de la figure 4. A chaque aiguille 3 correspond une perforation 700 de diamètre équivalent. Des perforations supplémentaires sont prévues permettant de faciliter le passage de substance dégazée à travers la plaque 70 lors de l'expulsion et notamment lorsque les perforations correspondant aux aiguilles 3 sont occupées par ces dernières. Dans cet exemple, les deux types de perforations sont similaires. Il est cependant possible d'utiliser des perforations de n'importe quelle forme et de n'importe quel diamètre pour le passage de substance dégazée à travers la plaque 70.

La tête de piston 6 comporte de préférence une portion diamétrale 60 dépourvue d'aiguilles 3. De cette manière, il est possible d'utiliser un détecteur de niveau 9 de type optique envoyant un faisceau lumineux 90 à travers la pluie de substance tombant des aiguilles d'introduction 3.

Il va de soi que des orifices d'admission en forme d'aiguilles creuses 3 et des plaques de raclage 70, 70' peuvent aussi bien être utilisés avec la variante de dispositif illustrée sur la figure 1. De même, d'autres formes d'orifices d'admission peuvent être prévus à l'extrémité des deux pistons 6, 6', par exemple une des formes illustrées sur les figures 2A à 2E.

Pour que les aiguilles 3 puissent traverser les perforations 700, il est nécessaire de veiller à ce que la tête de piston 6, 6' reste alignée au-dessus de la plaque perforée 70, 70'. Un système anti-rotation 62, 62', constitué ici par une tige solidaire du boîtier 2 et traversant la portion d'extrémité 63, 63' de la tige de piston, est donc prévu pour empêcher tout décalage angulaire des aiguilles 3 au-dessus des perforations 700.

La figure 5 présente une troisième variante de l'invention. Dans cette variante, la bifurcation 112 et les deux vannes 110, 110' sont remplacés par une vanne à trois voies 111 munie d'une entrée et de deux sorties 113, 113'. La vanne à trois voies 111 peut de préférence être commandée pour soit bloquer complètement la circulation de substance à dégazer, soit laisser passer la substance vers l'une ou l'autre des canalisations 113, 113'. Dans une variante préférentielle, la vanne 111 est choisie de manière à permettre également d'ouvrir les deux sorties et de répartir la substance entre les deux canalisations 113, 113'.

A noter que les variantes discutées avec les figures 4 et 5 peuvent être très aisément adaptées à des dispositifs de dégazage comprenant un nombre quelconque d'ensembles orifices d'introduction-piston-cylindre-orifice d'évacuation supérieur ou égal à 1. En particulier, le mouvement des pistons n'étant pas nécessairement synchronisé, ces variantes conviennent également à des dispositifs de dégazage en continu comprenant un grand nombre d'ensembles travaillant en parallèle.

Dans une autre variante non illustrée de l'invention, chaque ensemble cylindre-piston est alimenté à partir de moyens de compression 1 différents. Il est dans ce cas possible de renoncer à toute bifurcation le long de la canalisation 11. Les électrovannes 110, 110' peuvent éventuellement être supprimées à condition que les moyens de commande agissent directement sur la pompe à vide 1. En outre, cette variante permet de dégazer simultanément plusieurs substances différentes dans la même chambre de dégazage.

## Revendications

1. Dispositif de dégazage pour substances visqueuses ou pâteuses, comprenant :
une chambre de dégazage (2) munie d'au moins un orifice d'introduction (3) de la substance à dégazer et d'au moins un orifice d'évacuation de la substance dégazée (4 ; 4'),
des moyens de compression (10) permettant de comprimer la substance à dégazer (8) avant l'introduction dans la chambre de dégazage,
un dispositif (5) pour effectuer le vide d'air dans la chambre de dégazage (2),
des moyens d'expulsion (6, 7 ; 6', 7') de la substance dégazée (8') hors de la chambre de dégazage (2) par au moins un des orifices d'évacuation (4 ; 4'), lesdits moyens d'expulsion (6, 7 ; 6', 7') permettant d'expulser la substance dégazée (8') en maintenant le vide à l'intérieur de la chambre de dégazage (2),
lesdits moyens d'expulsion comprenant au moins un cylindre (7 ; 7') et au moins un piston (6 ; 6') à l'intérieur de la chambre de dégazage, le ou les orifices d'évacuation (4 ; 4') étant disposés au fond du ou des cylindres (7, 7'), la substance à dégazer (8) parvenant dans les cylindres (7') lorsque le piston (6') correspondant est relevé et étant évacuée hors des cylindres (7) et de la chambre de dégazage (2) par le ou les orifices d'évacuation (4) correspondant lorsque le piston correspondant (6) est abaissé,
- ce dispositif étant **caractérisé en ce que** le ou lesdits orifices d'introduction (3) de la substance à dégazer (8) dans la chambre de dégazage (2) sont situés ou prévus pour être placés au dessus du ou des cylindres (7, 7') lorsque le piston (6, 6') correspondant est relevé, de manière à permettre à la substance à dégazer (8) sortant de chaque orifice d'introduction (3) de tomber par gravité directement dans le ou les cylindres (7, 7'), le ou les orifices d'introduction (3) ayant une géométrie telle que la substance à dégazer (8) tombe dans le ou les cylindres (7') sous la forme d'une pluie fine ou d'au moins un film.

2. Dispositif de dégazage selon la revendication précédente, **caractérisé en ce qu'**il comporte en outre des moyens de détection (9) de la hauteur de substance dégazée (8') dans le ou les cylindres (7 ; 7'), et des moyens de commande permettant de commander l'expulsion de la substance dégazée lorsqu'elle atteint une hauteur déterminée.

3. Dispositif de dégazage selon la revendication précédente, **caractérisé en ce que** lesdits moyens de détection de hauteur (9) sont constitués par un détecteur optique monté près de l'orifice d'introduction (3) de la substance à dégazer.

4. Dispositif de dégazage selon la revendication 3, **caractérisé en ce que** lesdits moyens de détection de hauteur (9) sont constitués par un détecteur monté contre le ou lesdits cylindres (7 ; 7').

5. Dispositif de dégazage selon l'une des revendications 1 à 4, **caractérisé en ce qu'**il comporte un orifice d'évacuation (4, 4') par cylindre, et des moyens de blocage d'évacuation (40, 40') permettant de bloquer individuellement l'orifice d'évacuation de chaque cylindre.

6. Dispositif de dégazage selon la revendication précédente, **caractérisé en ce que** lesdits moyens de blocage d'évacuation (40, 40') comportent une diode fluidique (400, 401) par orifice d'évacuation (4, 4').

7. Dispositif de dégazage selon l'une des revendications précédentes, **caractérisé en ce que** la taille de l'ouverture du ou desdits orifices d'introduction (3) peut être ajustée.

8. Dispositif de dégazage selon l'une des revendications précédentes, **caractérisé en ce que** lesdits orifices d'introduction (3) sont constitués par une pluralité d'aiguilles creuses.

9. Dispositif de dégazage selon l'une des revendications précédentes, **caractérisé par** des moyens de raclage (70, 70') pour racler lesdits orifices d'introduction (3).

10. Dispositif selon la revendication précédente, **caractérisé en ce que** lesdits orifices d'introduction (3) sont constitués par une pluralité d'aiguilles creuses et **en ce que** lesdits moyens de raclage sont constitués par une tôle perforée (70, 70') disposée dans chaque cylindre (7, 7'), le diamètre et la disposition desdites perforations (700) correspondant au diamètre et à la disposition desdites aiguilles (3), en sorte que la surface externe desdites aiguilles est raclée lorsqu'elles traversent lesdites perforations (700).

11. Dispositif selon la revendication précédente, **caractérisé en ce que** lesdites tôles perforées comportent davantage de perforations (700) que lesdits orifices d'introduction ne comportent d'aiguilles creuses.

12. Dispositif de dégazage selon l'une des revendications précédentes, **caractérisé en ce que** lesdits moyens de compression (1) comprennent une pompe à fût.

13. Dispositif de dégazage selon l'une des revendications 1 à 12, **caractérisé en ce qu'**il comporte moins d'orifices d'introduction (3) que de pistons (6, 6', ..) et de cylindres (7, 7', ..), et des moyens pour placer le ou les orifices d'introduction (3) alternativement au-dessus de chaque cylindre.

14. Dispositif de dégazage selon la revendication précédente, **caractérisé en ce qu'**il comporte un orifice d'introduction (3), deux pistons (6, 6') et deux cylindres (7, 7'), et des moyens (30) pour déplacer l'orifice d'introduction et les pistons (6, 6') en sorte que la substance à dégazer (8) tombe alternativement dans un cylindre (7') puis dans l'autre (7).

15. Dispositif de dégazage selon l'une des revendications 1 à 13, **caractérisé en ce qu'**il comporte N pistons (6, 6', ..), N cylindres (7, 7', ..) et N orifices d'introduction (3), un orifice d'introduction (3) étant disposé au-dessus de chaque cylindre (7, 7'), et des moyens de répartition (110, 110'; 111) permettant de commander individuellement l'alimentation en substance à dégazer de chaque orifice d'introduction (3).

16. Dispositif selon la revendication précédente, **caractérisé en ce que** lesdits moyens de répartition sont constitués par une ou plusieurs vannes (110, 110'; 111) placés sur une ou plusieurs canalisations (113, 113') entre lesdits moyens de compression (10) et lesdits orifices d'introduction (3).

17. Dispositif selon la revendication précédente, **caractérisé en ce que** lesdits moyens de répartition (110, 110'; 111) sont placés hors de ladite chambre de dégazage (2).

18. Dispositif selon l'une des revendications 15 à 17, **caractérisé en ce que** lesdits orifices d'introduction (3) sont placés sur la tête des pistons correspondants (6).

19. Dispositif selon la revendication précédente, **caractérisé en ce que** la substance à dégazer traverse la tige (60, 60') du piston (6, 6') avant d'atteindre l'orifice d'introduction (3) correspondant.

20. Procédé d'utilisation d'un dispositif de dégazage pour substances visqueuses ou pâteuses, selon l'une quelconque des revendications 1 à 19, ce procédé comprenant les opérations suivantes :
obtention d'un vide d'air dans une chambre de dégazage (2),
compression de la substance à dégazer avant son introduction dans la chambre de dégazage,
introduction de la substance à dégazer comprimée dans ladite chambre de dégazage (2) à travers au moins un orifice d'introduction (3),
expulsion de la substance dégazée (8') à travers au moins un orifice d'évacuation (4, 4'), le vide dans la chambre de dégazage (2) étant maintenu au cours de l'expulsion de la substance dégazée,
**caractérisé en ce que** la substance à dégazer (8) introduite à travers au moins un orifice d'introduction (3) parvient dans un premier cylindre (7') en tombant directement dans le cylindre (7') par gravité, sous la forme d'une pluie fine ou d'au moins un film,
tandis que la substance dégazée (8') est évacuée d'un deuxième cylindre (7) au moyen d'un deuxième piston (6), et
**en ce que** lorsque la substance dégazée (8') atteint une hauteur prédéterminée dans ledit premier cylindre (7') et a été évacuée complètement du deuxième cylindre (7), le deuxième piston (6) est relevé, l'orifice d'introduction (3) est déplacé de manière à ce que la substance à dégazer (8) parvienne dans le deuxième cylindre, en tombant directement dans le second cylindre (7) par gravité, sous la forme d'une pluie de filaments ou d'au moins un film,
et un premier piston (6') est abaissé de manière à ce que la substance dégazée (8') soit évacuée hors du premier cylindre (7').

## Patentansprüche

1. Entgasungsvorrichtung für viskose oder dickflüssige Substanzen, umfassend:
eine Entgasungskammer (2), ausgestattet mit mindestens einer Einlassöffnung (3) für die zu entgasende Substanz und mindestens einer Auslassöffnung (4; 4') für die entgaste Substanz,
Druckmittel (10), welche erlauben, die zu entgasende Substanz (8) vor der Einführung in die Entgasungskammer zu komprimieren,
eine Einrichtung (5) zur Ausführung einer Luftevakuierung in der Entgasungskammer (2),
Austreibmittel (6, 7; 6', 7') für die entgaste Substanz (8') aus der Entgasungskammer (2) durch mindestens eine der Auslassöffnungen (4; 4'), wobei diese Austreibmittel (6, 7; 6', 7') ein Austreiben der entgasten Substanz (8') unter Beibehaltung des Vakuums im Innern der Entgasungskammer (2) erlauben,
und die genannten Austreibmittel mindestens einen Zylinder (7, 7') und mindestens einen Kolben (6, 6') im Inneren der Entgasungskammer umfassen, die Auslassöffnung oder Auslassöffnungen (4; 4') im Grund des oder der Zylinder (7, 7') angeordnet sind, die zu entgasende Substanz (8) in die Zylinder (7') gelangt, wenn der entsprechende Kolben (6') angehoben ist und aus den Zylindern (7) und der Entgasungskammer (2) durch die entsprechenden Auslassöffnungen (4) ausgestossen wird, wenn der entsprechende Kolben (6) abgesenkt wird,
- und diese Vorrichtung **dadurch gekennzeichnet ist, dass** die genannte Einlassöffnung oder Einlassöffnungen (3) für die zu entgasende Substanz (8) in der Entgasungskammer (2) über dem oder den Zylindern (7, 7') angeordnet oder zum Plazieren vorgesehen sind, wenn der entsprechende Kolben (6, 6') angehoben ist, um der zu entgasenden Substanz (8) zu erlauben, aus jeder Einlassöffnung (3) durch die Schwerkraft direkt in den oder die Zylinder (7, 7') zu fallen, und die Einlassöffnung oder Einlassöffnungen (3) eine Geometrie haben, dass die zu entgasende Substanz (8) in Form eines Sprühregens oder mindestens eines Films in den oder die Zylinder (7') fällt.

2. Entgasungsvorrichtung nach dem vorhergehenden Anspruch, **dadurch gekennzeichnet, dass** sie ferner Detektionsmittel (9) für die Höhe der entgasten Substanz (8') im oder in den Zylindern (7; 7') und Steuermittel umfasst, um zu erlauben, das Austreiben der entgasten Substanz zu steuern, wenn diese eine bestimmte Höhe erreicht.

3. Entgasungsvorrichtung nach dem vorhergehenden Anspruch, **dadurch gekennzeichnet, dass** die genannten Detektionsmittel (9) für die Höhe durch einen optischen Detektor gebildet sind, angeordnet neben der Einlassöffnung (3) für die zu entgasende Substanz.

4. Entgasungsvorrichtung nach Anspruch 3, **dadurch gekennzeichnet, dass** die genannten Detektionsmittel (9) für die Höhe durch einen gegen den oder die genannten Zylinder (7; 7') angebrachten Detektor gebildet sind.

5. Entgasungsvorrichtung nach einem der Ansprüche 1 bis 4, **dadurch gekennzeichnet, dass** sie eine Auslassöffnung (4, 4') pro Zylinder und Auslasssperrmittel (40, 40') umfasst, welche erlauben, die Auslassöffnung von jedem Zylinder einzeln zu sperren.

6. Entgasungsvorrichtung nach dem vorhergehenden Anspruch, **dadurch gekennzeichnet, dass** die genannten Auslasssperrmittel (40, 40') pro Auslassöffnung (4, 4') eine Fluidikdiode (400, 401) umfassen.

7. Entgasungsvorrichtung nach einem der vorhergehenden Ansprüche, **dadurch gekennzeichnet, dass** die Grösse der Öffnung der genannten Einlassöffnung oder Einlassöffnungen (3) eingestellt werden kann.

8. Entgasungsvorrichtung nach einem der vorhergehenden Ansprüche, **dadurch gekennzeichnet, dass** die genannten Einlassöffnungen (3) durch eine Mehrzahl von Hohlnadeln gebildet sind.

9. Entgasungsvorrichtung nach einem der vorhergehenden Ansprüche, **gekennzeichnet durch** Abstreifmittel (70,70') zum Abstreifen der genannten Einlassöffnungen (3).

10. Vorrichtung nach dem vorhergehenden Anspruch, **dadurch gekennzeichnet, dass** die genannten Einlassöffnungen (3) durch eine Mehrzahl von Hohlnadeln gebildet sind, und dass die genannten Abstreifmittel durch ein perforiertes Blech (70, 70') gebildet sind, angeordnet in jedem Zylinder (7, 7'), wobei der Durchmesser und die Anordnung der genannten Perforationen (700) dem Durchmesser und der Anordnung der genannten Nadeln (3) entsprechen, so dass die äussere Oberfläche der genannten Nadeln abgestreift wird, wenn sie die genannten Perforationen (700) überfahren.

11. Vorrichtung nach dem vorhergehenden Anspruch, **dadurch gekennzeichnet, dass** die genannten perforierten Bleche mehr Perforationen (700) umfassen, als die genannten Einlassöffnungen Hohlnadeln umfassen.

12. Entgasungsvorrichtung nach einem der vorhergehenden Ansprüche, **dadurch gekennzeichnet, dass** die genannten Druckmittel (1) eine Schraubpumpe umfassen.

13. Entgasungsvorrichtung nach einem der Ansprüche 1 bis 12, **dadurch gekennzeichnet, dass** sie weniger Einlassöffnungen (3) umfasst als Kolben (6, 6', ..) und Zylinder (7, 7', ..), und Mittel umfasst, um die Einlassöffnung oder Einlassöffnungen (3) alternativ über jedem Zylinder zu platzieren.

14. Entgasungsvorrichtung nach dem vorhergehenden Anspruch, **dadurch gekennzeichnet, dass** sie eine Einlassöffnung (3), zwei Kolben (6, 6') und zwei Zylinder (7, 7') umfasst, sowie Mittel (30) zum Verschieben der Einlassöffnung und der Kolben (6, 6'), so dass die zu entgasende Substanz (8) alternativ in den einen Zylinder (7') und dann in den anderen (7) fällt.

15. Entgasungseinrichtung nach einem der Ansprüche 1 bis 13, **dadurch gekennzeichnet, dass** sie N Kolben (6, 6', ..), N Zylinder (7, 7', ..) und N Einlassöffnungen (3) umfasst, wobei eine Einlassöffnung (3) über jedem Zylinder (7, 7') angeordnet ist, und Verteilmittel (110, 110'; 111) erlauben, die Zuführung von zu entgasender Substanz von jeder Einlassöffnung (3) individuell zu steuern.

16. Vorrichtung nach dem vorhergehenden Anspruch, **dadurch gekennzeichnet, dass** die genannten Verteilmittel durch ein oder mehrere Ventile (110, 110'; 111) gebildet sind, angeordnet auf einer oder mehreren Rohrleitungen (113, 113') zwischen den genannten Druckmitteln (10) und den genannten Einlassöffnungen (3).

17. Vorrichtung nach dem vorhergehenden Anspruch, **dadurch gekennzeichnet, dass** die genannten Verteilmittel (110, 110'; 111) ausserhalb der genannten Entgasungskammer (2) angeordnet sind.

18. Vorrichtung nach einem der Ansprüche 15 bis 17, **dadurch gekennzeichnet, dass** die genannten Einlassöffnungen (3) auf dem Kopf der entsprechenden Kolben (6) angeordnet sind.

19. Vorrichtung nach dem vorhergehenden Anspruch, **dadurch gekennzeichnet, dass** die zu entgasende Substanz die Stange (60, 60') des Kolbens (6, 6') vor dem Erreichen der entsprechenden Einlassöffnung (3) durchläuft.

20. Verwendungsverfahren einer Entgasungsvorrichtung für viskose oder dickflüssige Substanzen nach irgendeinem der Ansprüche 1 bis 19, wobei das Verfahren die folgenden Vorgänge umfasst:
Erzeugung eines Luftvakuums in einer Entgasungskammer (2),
Kompression der zu entgasenden Substanz vor dem Einlassen in die Entgasungskammer,
Einlassen der zu entgasenden Substanz in die genannte Entgasungskammer (2) durch mindestens eine Einlassöffnung(3),
Austreiben der entgasten Substanz (8') durch mindestens eine Auslassöffnung (4, 4'), wobei das Vakuum in der Entgasungskammer (2) während des Austreibens der entgasten Substanz erhalten bleibt,
**dadurch gekennzeichnet, dass** die zu entgasende Substanz (8), die durch mindestens eine Einlassöffnung (3) eingeführt wurde, in einen ersten Zylinder (7') gelangt, indem sie direkt durch die Schwerkraft in den Zylinder (7') fällt, unter Bildung eines Sprühregens oder mindestens eines Films,
während die entgaste Substanz (8') von einem zweiten Zylinder (7) mittels eines zweiten Kolbens (6) ausgestossen wird, und
dass, wenn die entgaste Substanz (8') eine vorbestimmte Höhe im ersten Zylinder (7') erreicht und vollständig aus dem genannten zweiten Zylinder (7) ausgestossen ist, der zweite Zylinder (6) angehoben wird, die Einlassöffnung (3) verschoben wird, so dass die zu entgasende Substanz (8) in den zweiten Zylinder gelangt, indem sie durch die Schwerkraft direkt in den zweiten Zylinder (7) fällt, unter Bildung eines Sprühregens oder mindestens eines Films,
und ein erster Kolben (6') abgesenkt wird, so dass die entgaste Substanz (8') aus dem ersten Zylinder (7') ausgestossen wird.

## Claims

1. Degassing device for viscous or pasty substances, comprising:
a degassing chamber (2) provided with at least one inlet orifice (3) for the substance to be degassed and at least one outlet orifice (4; 4') for the degassed substance,
compression means (10) allowing the substance to be degassed (8) to be compressed before introduction into the degassing chamber,
a device (5) for creating the air vacuum in the degassing chamber (2),
means (6, 7; 6', 7') of expulsion of the degassed substance (8') out of the degassing chamber (2) through at least one of the outlet orifices (4; 4'), said expulsion means (6, 7; 6', 7') allowing the degassed substance (8') to be expelled while maintaining the vacuum inside the degassing chamber (2),
said expulsion means comprising at least one cylinder (7; 7') and at least one piston (6; 6') inside the degassing chamber, the outlet orifice or orifices (4; 4') being disposed at the bottom of the cylinder or cylinders (7, 7'), the substance to be degassed (8) arriving in the cylinders (7') when the corresponding piston (6') is raised and being discharged out of the cylinders (7) and out of the degassing chamber (2) through the corresponding outlet orifice or orifices (4) when the corresponding piston (6) is lowered,
- this device being **characterised in that** said orifice or orifices of introduction (3) of the substance to be degassed (8) in the degassing chamber (2) are situated or provided to be placed above the cylinder or cylinders (7, 7') when the corresponding piston (6, 6') is raised, in such a way as to allow the substance to be degassed (8) exiting from each inlet orifice (3) to fall by gravity directly into the cylinder or cylinders (7, 7'), the inlet orifice or orifices (3) having a geometry such that the substance to be degassed (8) falls into the cylinder or cylinders (7') in the form of a drizzle or at least a film.

2. Degassing device according to the preceding claim, **characterised in that** it further comprises means of detection (9) of the level of the degassed substance (8') in the cylinder or cylinders (7; 7'), and control means allowing the expulsion of the degassed substance to be ordered when it reaches a predetermined level.

3. Degassing device according to the preceding claim, **characterised in that** said level detection means (9) are made up of an optical detector mounted near the orifice of introduction (3) of the substance to be degassed.

4. Degassing device according to claim 3, **characterised in that** said level detection means (9) are made up of a detector mounted against said cylinder or cylinders (7; 7').

5. Degassing device according to one of the claims 1 to 4, **characterised in that** it comprises one outlet orifice (4, 4') per cylinder, and means of blocking discharge (40, 40') allowing the outlet orifice of each cylinder to be blocked individually.

6. Degassing device according to the preceding claim, **characterised in that** said discharge blocking means (40, 40') comprise one fluidic diode (400, 401) per outlet orifice (4, 4').

7. Degassing device according to one of the preceding claims, **characterised in that** the size of the aperture of said inlet orifice or orifices (3) can be adjusted.

8. Degassing device according to one of the preceding claims, **characterised in that** said inlet orifices (3) are made up of a plurality of hollow needles.

9. Degassing device according to one of the preceding claims, **characterised by** scraping means (70, 70') for scraping said inlet orifices (3).

10. Degassing device according to the preceding claim, **characterised in that** said inlet orifices (3) are made up of a plurality of hollow needles and **in that** said scraping means comprise a perforated plate (70, 70') disposed in each cylinder (7, 7'), the diameter and arrangement of said perforations (700) corresponding to the diameter and the arrangement of said needles (3) so that the outer surface of said needles is scraped when they pass through said perforations (700).

11. Degassing device according to the preceding claim, **characterised in that** said perforated plates comprise more perforations (700) than said inlet orifices have hollow needles.

12. Degassing device according to one of the preceding claims, **characterised in that** said compression means (1) comprise a drum pump.

13. Degassing device according to one of the claims 1 to 12, **characterised in that** it comprises fewer inlet orifices (3) than pistons (6, 6', ..) and cylinders (7, 7', ..), and means for placing the inlet orifice or orifices (3) alternatively above each cylinder.

14. Degassing device according to the preceding claim, **characterised in that** it comprises an inlet orifice (3), two pistons (6, 6') and two cylinders (7, 7'), and means (30) for displacing the inlet orifice and the pistons (6, 6') so that the substance to be degassed (8) falls alternately into one cylinder (7') then into another (7).

15. Degassing device according to one of the claims 1 to 13, **characterised in that** it comprises N pistons (6, 6', ..), N cylinders (7, 7', ..), and N inlet orifices (3), one inlet orifice (3) being disposed above each cylinder (7, 7'), and distribution means (110, 110'; 111) allowing the supply of substance to be degassed to each inlet orifice (3) to be controlled individually.

16. Device according to the preceding claim, **characterised in that** said distribution means are made up of one or more valves (110, 110'; 111) placed on one or more tubes (113, 113') between said compression means (10) and said inlet orifices (3).

17. Device according to the preceding claim, **characterised in that** said distribution means (110, 110'; 111) are placed outside of said degassing chamber (2).

18. Device according to one of the claims 15 to 17, **characterised in that** said inlet orifices (3) are placed on the head of the corresponding pistons (6).

19. Device according to the preceding claim, **characterised in that** the substance to be degassed passes through the rod (60, 60') of the piston (6, 6') before reaching the corresponding inlet orifice (3).

20. Method of using a device for degassing viscous or pasty substances, according to any one of the claims 1 to 19, this method comprising the following steps:
creating an air vacuum in a degassing chamber (2),
compressing the substance to be degassed before its introduction into the degassing chamber,
introducing the compressed substance to be degassed into said degassing chamber (2) through at least one inlet orifice (3),
expelling the degassed substance (8') through at least one outlet orifice (4, 4'), the vacuum being maintained in the degassing chamber (2) during the expulsion of the degassed substance,
**characterised in that** the substance to be degassed (8) introduced through at least one inlet orifice (3) arrives in a first cylinder (7') by falling directly into the cylinder (7') by gravity, in the form of a drizzle or at least a film,
whereas the degassed substance (8') is discharged from a second cylinder (7) by means of a second piston (6), and
**in that** when the degassed substance (8') reaches a predetermined level in said first cylinder (7') and has been discharged completely from the second cylinder (7), the second piston (6) is raised, the inlet orifice (3) is displaced in such a way that the substance to be degassed (8) arrives in the second cylinder by falling directly into the second cylinder (7) by gravity, in the form of a shower of filaments or at least a film,
and a first piston (6') is lowered in such a way that the degassed substance (8') is discharged out of the first cylinder (7').
